# EUROPÄISCHE PATENTSCHRIFT

(11) **EP 1 098 764 B1**
(45) Veröffentlichungstag und Bekanntmachung des Hinweises auf die Patenterteilung: **06.05.2004**
(21) Anmeldenummer: 99929321.0
(22) Anmeldetag: 29.06.1999
(51) Int. Cl.: B32B 27/32, B65D 65/40

(54) **TIEFZIEHFÄHIGE, GLEITFÄHIGE FOLIE AUF BASIS VON POLYOLEFINEN UND POLYAMID**
DEEP-DRAWN SLIDABLE FOIL BASED ON POLYOLEFINS AND POLYAMIDE
FEUILLE A EMBOUTIR APTE AU GLISSEMENT A BASE DE POLYOLEFINES ET DE POLYAMIDE

(30) Priorität: 10.07.1998 DE 19830975
(43) Veröffentlichungstag der Anmeldung: 16.05.2001
(73) Patentinhaber: Wipak Walsrode GmbH & Co. KG, 29656 Walsrode (DE)
(72) Erfinder: KASCHEL, Gregor, D-29699 Bomlitz (DE)
(74) Vertreter: Kutzenberger, Helga, Dr.
(86) Internationale Anmeldenummer: PCT/EP1999/004480
(87) Internationale Veröffentlichungsnummer: WO 2000/002725

(56) Entgegenhaltungen:
- EP-A- 0 818 508
- EP-A1- 0 613 772
- EP-A1- 0 613 774
- EP-A1- 0 638 487
- EP-A2- 0 322 189
- EP-A2- 0 507 351
- US-A- 5 118 563

## Beschreibung

Die Gleitfähigkeit von tiefziehfähigen Folien wird zunehmend wichtiger. Aus Rationalisierungsgründen werden zunehmend automatische Einlegemaschinen (Roboter) genutzt, um die in Folien verpackten Produkte in Kartons einzulegen. Eine wesentliche Voraussetzung für das maschinelle Einlegen ist eine gleitfähige Folie. Bei tiefziehbaren Folien ist die Gleitfähigkeit in den tiefgezogenen Bereichen kritisch. Ist die Gleitfähigkeit der Mulden unzureichend, so kann der Karton nicht mit der vorgesehenen Anzahl an Packungen gefüllt werden. Zudem von großer Bedeutung ist der Produktschutz durch die Verpackung. Dies erfordert von der Folie eine hohe mechanische Belastbarkeit insbesondere gegenüber scharfkantigen Füllgütern.

Zur Vereinfachung der Beschreibung des Standes der Technik und der Erfindung werden nachfolgend die Polymere näher erläutert, die für Folien auf dem Gebiet der vorliegenden Erfindung verwendet werden und für diese Polymere Abkürzungen zur Vereinfachung der weiteren Beschreibung eingeführt. Soweit hier spezifische Polymere genannt sind, sind diese für die entsprechenden Schichten der erfindungsgemäßen Folie geeignet.

Als "PO" werden Polyolefine zusammengefaßt. Beispiele für Polyolefine sind Polyethylen niedriger Dichte ((LDPE), hoher Dichte (HDPE), lineares Polyethylen geringer Dichte (LLDPE), Polypropylen (PP), Polyisobutylen, Polybutylen und alle weiteren Polymere, die aus Olefinen hergestellt sind. Desweiteren werden hier mit PO die Olefincopolymerisate bestehend aus Olefinen und anderen Monomeren zusammengefaßt, wobei in ihrer Zusammensetzung die Olefine überwiegen. Dies sind z.B. Ethylen-Copolymerisate mit ungesättigten Estern (z.B. Vinylacetat), Ethylen-Copolymerisate mit ungesättigten Carbonsäuren bzw. ihren Salzen.

Unter Polyamid (Abkürzung "PA") versteht man im weitesten Sinne polymere Verbindungen, die durch die Säureamid-Gruppe R-NH-CO-R' miteinander verknüpft sind. Man unterscheidet zwei Gruppen von Polyamiden: Aufbau aus einem Grundstoff durch Polykondensation von ω-Aminocarbonsäuren oder Polymerisation ihrer Lactame zum Polyamid 6-Typ und solche, die aus zwei Grundstoffen, Diaminen und Dicarbonsäuren, durch Polykondensation zum Polyamid 66-Typ entstanden sind. Darüber hinaus sind noch Copolyamide üblich, die eine Kombination der genannten Polyamidtypen darstellen.

Mit "PP" wird Polypropylen gekennzeichnet, unabhängig von der räumlichen Anordnung der seitenständigen Methyl-Gruppen. Mit "EPC" werden Copolymerisate des Propylen mit 1-10 Mol-% Ethylen bezeichnet, wobei das Ethylen statistisch verteilt im Molekül vorliegt.

Als "LDPE" wird Polyethylen niedriger Dichte bezeichnet, das im Dichtebereich von 0,86 bis 0,93 g/cm³ liegt. Die LPDE-Moleküle zeichnen sich durch einen hohen Verzweigungsgrad aus.

Als "LLDPE" werden die linearen Polyethylene niedriger Dichte bezeichnet, die neben Ethylen als Comonomere ein oder mehrere α-Olefine mit mehr als 3 C-Atomen enthalten. Als α-Olefine seien hier stellvertretend genannt: Buten-1, Hexen-1, 4-Methylpenten-1 und Octen-1. Aus der Polymerisation der genannten Stoffe ergibt sich die für LLDPE typische molekulare Struktur, die durch eine lineare Hauptkette mit daranhängenden Seitenketten gekennzeichnet ist. Die Dichte variiert zwischen 0,86 bis 0,935 g/cm³. Der Schmelzflußindex MFR liegt üblicherweise zwischen 0,3 bis 8 g/10 min. In einigen Veröffentlichungen werden die linearen Ethylen/a-Olefin-Copolymerisate entsprechend ihrer Dichte unterteilt in VLDPE oder ULDPE. Da aber nach GNAUCK/FRÜNDT (Einstieg in die Kunststoffchemie Hanser-Verlag 1991, S. 58) Eigenschaften, Verarbeitung und Verwendung dieser Copolymerisate weitgehend den Ethylen-Homopolymerisaten entspricht, wird hier auf eine genauere Unterscheidung verzichtet.

Mit "HDPE" werden Polyethylene hoher Dichte bezeichnet, die nur eine geringe Verzweigung ihrer Molekülketten aufweisen. Die Dichte des HDPE kann zwischen 0,9 g/cm³ und 0,97 g/cm³ liegen.

Mit "mPE" wird hier ein Ethylen-Copolymerisat bezeichnet, das mittels Metallocen-Katalysatoren polymerisiert wurde. Als Comonomer wird vorzugsweise ein α-Olefin mit vier oder mehr Kohlenstoffatomen eingesetzt. Die mit konventionellen Ziegler-Natta-Katalysatoren hergestellten Polymere enthalten häufig in den niedermolekularen Fraktionen höhere Konzentrationen der α-Olefine. Als Folge der sehr einheitlichen katalytisch wirksamen Metallocen-Zentren findet man enge Molekülargewichtsverteilungen und bei Fraktionierungen sehr einheitlichen Einbau der α-Olefine sowohl in den hoch- als auch in den niedermolekularen Fraktionen. Die Dichte liegt vorzugsweise zwischen 0,900 und 0,930 g/cm³. Die Molekulargewichtsverteilung M_{w}/Mₙ ist kleiner 3,5, vorzugsweise kleiner 3.

Mit "EAA" werden Copolymerisate bestehend aus Ethylen und Acrylsäure und mit "EMAA" Copolymerisate bestehend aus Ethylen und Methacrylsäure bezeichnet. Der Ethylengehalt liegt vorzugsweise zwischen 60 und 99 Mol-%.

Mit "I" werden auf Olefinen basierende Copolymerisate bezeichnet, deren Moleküle über Ionenbindung vemetzt sind. Die ionischen Vernetzungen sind reversibel, dies bedingt ein Auflösen der ionischen Vernetzung bei den üblichen Verarbeitungstemperaturen (180°C-290°C) und eine Neubildung in der Abkühlphase. Üblicherweise werden als Polymere Copolymerisate aus Ethylen mit Acrylsäuren eingesetzt, die mit Natrium- oder Zinkionen vernetzt sind.

Mit "EVA" wird ein Copolymerisat bestehend aus Ethylen und Vinylacetat bezeichnet. Der Ethylengehalt liegt vorzugsweise zwischen 60 und 99 Mol-%.

Mit "HV" werden coextrudierbare, haftvermittelnde Polymere (Haftvermittler) bezeichnet. Demgegenüber werden unter Klebstoffen nichtmetallische Werkstoffe einschließlich Polymeren verstanden, die zwei Folienschichten durch Oberflächenhaftung und innere Festigkeit verbinden können, ohne daß sich das Gefüge der verbundenen Folienschichten wesentlich ändert. Im Gegensatz zu den Haftvermittlern sind Klebstoffe nicht coextrudierbar, sondern müssen separat durch Flächenauftrag, z.B. durch Laminieren oder Flüssigauftrag aufgebracht werden. Haftvermittler sind bevorzugt modifizierte Polyolefine, wie z.B. LDPE, LLDPE, mPE, EVA, EAA, EMAA, PP, EPC, die mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sind. Als extrudierbare Haftvermittler können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester, die auch mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sein können, zum Einsatz kommen. Daneben können auch Polyolefine wie z.B. Polyethylen, Polypropylen, Ethylen/Propylen-Copolymerisate oder Ethylen/α-Olefin-Copolymerisate, die mit Copolymerisaten von Ethylen mit α,β-einfach ungesättigten Dicarbonsäuren, wie Acrylsäure, Methacrylsäure und/oder deren Metallsalzen mit Zink oder Natrium und/oder deren Alkyl(C₁-C₄)estern, gepfropft sind, zum Einsatz kommen. Besonders geeignet als Haftvermittler sind Polyolefine, insbesondere Ethylen/α-Olefin-Copolymerisate mit aufgepfropftem α,β-einfach ungesättigten Dicarbonsäureanhydrid, insbesondere Maleinsäureanhydrid. Die HV können auch ein Ethylen/Vinylacetat-Copolymerisat, vorzugsweise mit einem Vinylacetatgehalt von wenigstens 10 Gewichts-%, enthalten.

Verschiedene Schichten einer Folie werden im folgenden durch "/" getrennt. Mischungen von Polymeren einer Schicht werden durch runde Klammem gekennzeichnet und durch ein "+" verbunden. So beschreibt der Folienaufbau ".../LLDPE/(mPE+LDPE)" eine mehrschichtige Folie, wobei die eine Außenschicht eine Mischung aus mPE und LDPE enthält. Die Innenschicht besteht aus LLDPE. Die restlichen Schichten der Folie werden durch "..." angedeutet.

Die folgenden Dokumente sind für die vorliegende Erfindung als relevanter Stand der Technik anzusehen:

In EP 0 236 099 wird eine 7-schichtige, coextrudierte Folie mit einem völlig symmetrischen Aufbau geschildert. Sie umfaßt eine Kernschicht aus Ethylen/Vinylalkohol-Copolymer, zwei Außenschichten, die jeweils polymeres Material oder eine Mischung von polymeren Material enthalten, zwei an der Kernschicht haftende Polyamidschichten sowie zwei haftvermittelnde Innenschichten, die zwischen den Außen- und Polyamidschichten liegen. Die Außenschichten sind vorzugsweise lineare Polyethylene. Folien dieser Art werden als sehr zäh und abrasionsfest bezeichnet. Über die Durchstichfestigkeit dieser Folie wird keine Aussage gemacht. Weiterhin sollen Folien dieser Art sich bereits bei niedrigen Temperaturen versiegeln lassen. Dies ist allerdings ein Widerspruch in sich, da niedrige Siegeltemperaturen stets nur durch weiche Siegelschichten erreichbar sind. Bei dem völlig symmetrischen Folienaufbau würde dies eine abrasionsempfindliche Außenschicht bedeuten, die einen hohen Reibungswiderstand erzeugt.

In EP 0 613 774 wird eine mehrschichtige, leicht tiefziehbare Folie mit hoher Durchstichfestigkeit geschildert. Die Folie hat auf der Außenseite ein Polyamid und auf der Siegelseite ein Polymer basierend auf Olefinen. Der Nachteil dieses Folienaufbaues besteht im außen liegenden Polyamid, da unmittelbar nach dem Tiefzug die Gleitfähigkeit der Mulden gegeneinander nicht gegeben ist.

In WO 94/19186 wird eine symmetrische Folie mit dem Folienaufbau Polyolefin/Haftvermittlerl/PA/EVOH/PA/Haftvermittler/Polyolefin geschildert. Das Polyamid ist bevorzugt ein aromatisches PA oder ein daraus abgeleitetes, welches kein Caprolactam enthält. Hervorgehoben wird die Möglichkeit, daß die außen liegenden Haftvermittler- und Polyolefinschichten von der Folie abgezogen werden können. Aromatische oder teilaromatische Polyamide lassen sich nur unzureichend tiefziehen, da die Tiefziehtemperatur oberhalb der Glasübergangstemperatur liegen muß. Von aromatischen bzw. teilaromatischen Polyamiden ist die sehr hohe Glasübergangstemperatur von 100°C und höher bekannt, wünschenswert sind Tiefziehtemperaturen von ca. 70 bis 90°C. Völlig unerwähnt bleibt die Möglichkeit zum Tiefzug dieser Folien und die Gleiteigenschaften der Folie unmittelbar nach dem Tiefzug.

In EP 0 686 497 wird die dissimilare Siegelung verschiedener Siegelschichten beschrieben. Besonders gute Siegelungen werden durch eine dünne Ionomer-Siegelschicht, die durch die erfindungsgemäße Hilfssiegelschicht bestehend aus zwei Komponenten, wobei eine der beiden Komponenten ein Ionomer, Elastomer, Plastomer oder Carboxyl-modifiziertes Polyethylen ist, erreicht. Die Gleiteigenschaften der Folien im allgemeinen, insbesondere unmittelbar nach dem Tiefzug, und Durchstichfestigkeiten der Folien werden nicht diskutiert. Von den in der Siegelschicht enthaltenden Polymeren, Ionomer, Plastomer, Elastomer und Carboxylmodifizierten Polyethylenen ist bekannt, daß sie die Gleiteigenschaften der Folie drastisch reduzieren und zu einem Verblocken der Folien führen. Die Erfahrung lehrt, daß selbst durch die Zugabe von Antiblock- und Gleitmitteln die Gleiteigenschaften der Folie nur geringfügig verbessert werden kann. Insbesondere ist die Gleitfähigkeit der Folie im tiefgezogenen Bereich völlig unzureichend.

In EP 0 800 915 werden 7-schichtige, coextrudierte Folienaufbauten erläutert. Gemeinsam allen Folienaufbauten ist die Schichtenfolge Polyamid/Ethylen/Vinylalkohol-Copolymer/Polyamid. Auf Grund des Herstellungsverfahrens (mit Wasser gekühlte ringförmige Polymerschmelze) werden diesen Folien die besonderen Eigenschaften Klarheit und Verarbeitbarkeit zugesprochen. In der bevorzugten Form enthält der Film als nicht siegelnde Außenschicht Polyamid. Es ist aber bekannt, daß durch die Wasserkühlung die Gleiteigenschaften einer Folie verschlechtert werden. Dies trifft insbesondere auf die außen liegende Polyamidschicht zu. Die Gleitfähigkeit läßt sich auch durch die Zugabe von Additiven nur unzureichend verbessern.

Es stellt sich daher die Aufgabe, eine Folie so zu gestalten, daß sie
- klebstofffrei und
- tiefziehbar ist
- nach dem Tiefzug eine ausreichend hohe Gleitfähigkeit im tiefgezogenen Bereich und
- eine hohe Durchstichfestigkeit besitzt.

Erfindungsgemäß gelang dies durch eine mittels Coextrusion hergestellte, mehrschichtige Folie, wie sie in Figur 1 schematisch dargestellt ist, mit einem Folienaufbau aus
a) einer ersten Außenschicht 10 bestehend aus einem oder mehreren Polyolefinen oder Olefincopolymeren oder einer Mischung dieser Polymeren und üblichen Gleit- und Antiblockmitteln,
b) einer zweiten Außenschicht 18 aus einem oder mehreren Polyolefinen oder Olefincopolymeren oder einer Mischung dieser Polymeren und üblichen Gleit- und Antiblockmitteln,
c) einer Innenschicht 13 enthaltend im Polyamid oder eine Mischung mehrerer Polyamide,
d) eine Innenschicht 13 enthaltend ein haftvermittelndes Polymer oder eine haftvermittelnde Polymermischung, basierend auf Polyolefinen oder auch Polyolefinen abgeleiteten Copolymeren,
e) eine Innenschicht 16 enthaltend ein haftvermittelndes Polymer oder eine haftvermittelnde Polymermischung basierend auf Polyolefinen oder aus Olefinen abgeleiteten Copolymeren,
dadurch gekennzeichnet, daß der Schmelzpunkt der zweiten Außenschicht 18 niedriger ist als der der ersten Außenschicht 10 und daß zwischen der zweiten Außenschicht 18 und der haftvermittelnden Schicht 16 eine zusätzliche Schicht 17 vorhanden ist, die Polyolefin oder Olefincopolymer oder eine Mischung dieser Polymere enthält.

Die erfindungsgemäße Folie läßt sich auf allen üblichen Extrusionseinrichtungen, auf denen Polyamid oder Polyolefine verarbeitbar sind, extrudieren.

Die Außenschicht 10 enthält Polyolefine oder Olefincopolymere oder eine Mischung dieser Polymere. Bevorzugt eingesetzt werden LDPE, LLDPE, mPE, I, HDPE, PP, EPC oder Mischungen dieser Polymere. Zur Verbesserung der Gleitfähigkeit werden Gleit- und Antiblockmittel zugegeben. Die Menge des Gleitmittels in der Schicht 10 sollte je nach Schichtdicke zwischen 50 und 2000 ppm liegen. Der Gehalt des Antiblockmittels in der Schicht 10 sollte zwischen 50 und 3000 ppm, bevorzugt zwischen 100 und 2000 ppm liegen.

Die zweite Außenschicht 18 enthält Polyolefine oder Olefincopolymere oder eine Mischung dieser Polymere. Bevorzugt eingesetzt werden LDPE, LLDPE, mPE, HDPE, PP, EPC, EVA, EAA, EMAA, I oder Mischungen dieser Polymere. Zur Verbesserung der Gleitfähigkeit werden Gleit- und Antiblockmittel zugegeben. Die Menge des Gleitmittels in der Schicht 18 sollte je nach Schichtdicke zwischen 50 und 2000 ppm liegen. Der Gehalt des Antiblockmittels in der Schicht 10 sollte zwischen 50 und 3000 ppm, bevorzugt zwischen 100 und 2000 ppm liegen.

Der Schmelzpunkt der Außenschicht 18 ist kleiner als der Schmelzpunkt der ersten Außenschicht 10 und sollte vorzugsweise mindestens 5°C unterhalb des Schmelzpunktes der ersten Außenschicht 10 liegen. Dies verbessert die Maschinengängigkeit der Folien auf den Tiefziehmaschinen, da die zum Füllgut liegende Siegelschicht früher erweicht als die Außenschicht 10. Die Außenschicht 10 berührt die Verpackungsmaschine und im Falle eines zu frühen Erweichens werden die Gleiteigenschaften negativ beeinflußt.

Die Innenschicht 13 enthält als Polyamid bevorzugt PA6, PA11, PA12 und PA66 oder auf diesen basierende Copolyamide bzw. Mischungen aus diesen Polymeren. Copolyamide sind z.B. PA6/66, PA6/12, PA6/6I, PA6/IPDI, PA66/610, PA6/11/66. Zur Verbesserung der Sauerstoffbarriere oder Tiefziehfähigkeit können diese Polyamide mit teilaromatischen PA's gemsicht werden, wie z.B. PA6I, PAMXD6, PA6I/6T.

Die aus PA bestehende Innenschicht kann durch Additive modifiziert sein. Als Additive werden z.B. Kristallisationsmittel, Schmiermittel und Verarbeitungshilfsmittel betrachtet.

Weiterhin können die Polyamide durch schichtartige Partikel modifiziert sein. Die schichtartigen Partikel können aus organischen wie auch aus anorganischen Stoffen bestehen. Als charakteristischer Partikeldurchmesser wird die Sehnenlänge des Partikels verstanden, die üblicherweise unterhalb von 700 nm liegt. Durch die Zugabe dieser Partikel kann z.B. die Sauerstoffbarriere oder die Zugfestigkeit der Folie verbessert werden.

Die Innenschichten 12 und 16 enthalten einen extrudierbaren Haftvermittler. Als solcher werden bevorzugt modifizierte Polyolefine bzw. Olefincopolymere eingesetzt. Die Haftvermittler erhöhen die Verbundhaftung zwischen zwei ansonsten nicht haftenden Schichten.

Die zusätzliche Innenschicht 17 besteht aus Polyolefinen oder Olefincopolymeren oder Mischungen dieser Polymere. Dabei werden Tiefziehfähigkeit und Durchstichfestigkeit bei ausreichender Siegelfähigkeit insbesondere dann positiv beeinflußt, wenn der Schmelzpunkt der Schicht 17 sich vom Schmelzpunkt der Außenschicht 18 um mehr als 3°C unterscheidet. Die Innenschicht 17 und die Außenschicht 18 zeigen eine ausreichende Haftung zueinander, eine zusätzliche, haftvermittelnde Schicht ist nicht notwendig.

In einer speziellen Ausführungsform der Erfindung kann zwischen der Innenschicht 13 und der haftvermittelnden Innenschicht 16 eine weitere Innenschicht plaziert werden, die ebenfalls aus Polyamid besteht. Das Polyamid dieser Innenschicht unterscheidet sich in seiner Zusammensetzung von der Schicht 13. Dies kann z.B. notwendig sein, um eine preiswerte Möglichkeit zu haben, die Folie in ihrem Barriereverhalten gegenüber Gasen, insbesondere Sauerstoff oder Strahlung, insbesondere ultravioletter Strahlung zu verbessern. Es ist hierzu bekannt, daß bestimmte PA-Typen bestimmte Wellenlängen des UV-Lichtes absorbieren können und somit empfindliche Produkte wie z.B. Fleisch besser schützen.

Weiterhin kann in speziellen Anwendungsfällen der Erfindung zwischen der Innenschicht 13 und der weiteren Innenschicht aus Polyamid eine zusätzliche Schicht bestehend aus EVOH plaziert werden, wenn die mit PA erreichbare Sauerstoffbarriere nicht ausreichend ist.

Folien gemäß der Erfindung eignen sich insbesondere für Tiefziehanwendungen. Unter Tiefziehen wird die Verformung einer Folie oder Platte verstanden, die nach Erwärmung mittels einer Luftdruckdifferenz oder eines Kolbens in eine vorgeformte Mulde gedrückt oder gezogen wird. Während des Tiefziehvorganges nimmt entsprechend des Rechteckverhältnisses die Foliendicke ab.

Folien gemäß der Erfindung eignen sich weiterhin für die als Lap-Seal bezeichneten Anwendungen. Hierbei werden die Außenseite 10 mit der Außenseite 18 versiegelt. Zur Erzielung einer hohen Siegelfestigkeit sollte in diesem Fall zur Erreichung eines hohen Hot-Tacks die beiden Außenseiten eine ähnliche Zusammensetzung aufweisen.

Folien gemäß der Erfindung eignen sich für die Verpackung unterschiedlichster Füllgüter, ob sie ein oder mehrere feste oder flüssige Phasen oder eine Kombination der genannten Phasen darstellen. Sie eignen sich für die Verpackung von kalten oder heißen Produkten.

Zur Verbesserung der Gleiteigenschaften können der Folie übliche Gleit- und Antiblockmittel zugesetzt werden. Beispiele sind als Antiblockmittel bekannte feste organische oder anorganische Partikel, die aus der äußeren Oberfläche der Siegelschicht hervortreten und auf diese Weise das Gleitverhalten der Folie verbessern, wie beispielsweise Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Bekannte organische Antiblockmittel sind beispielsweise unverträgliche Polymerisate wie Polyester, Polycarbonat. Wirksame Mengen liegen im Bereich von 0,05 bis 2 Gew.-%, vorzugsweise 0,1 bis 0,8 Gew.-%. Die mittlere Teilchengröße liegt zwischen 1 und 10 µm, wobei hier Teilchen mit kugelförmiger Gestalt besonders geeignet sind. Vorzugsweise werden diese Partikel nur in beiden Außenschichten eingesetzt.

Andere Additive, die die Gleitfähigkeit der Folie, auch in Zusammenwirken mit den genannten festen Partikeln, verbessern, sind die üblicherweise als Gleitmittel bezeichneten höheren aliphatischen Säsureamide, höhere aliphatische Säureester, Wachse, Metallseifen sowie Polydimethylsiloxane oder andere Stoffe, wie sie beispielsweise bei Otto Piringer: Verpackungen für Lebensmittel, VCH Verlagsgesellschaft 1993, S. 53 angegeben werden. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere für die Außenschichten der erfindungsgemäßen Folie geeignetes aliphatisches Säureamid ist Erucasäureamid.

Der Gesamtgehalt des Gleitmittels in der Folie sollte 1000 ppm nicht übersteigen. Bei dickeren Folien sollten geringere absolute Gleitmittelgehalte angestrebt werden, da ansonsten mit einer verstärkten Ablagerung des Gleitmittels an der Folienoberfläche zu rechnen ist. Im Extremfall können sich optisch auffällige Flecken bestehend aus Gleitmittel auf der Folie zeigen.

Die erfindungsgemäße Folie kann in einer oder mehreren Schichten eingefärbt sein.

Die erfindungsgemäße Folie kann weitere Additive wie Antifogmittel oder Antistatika enthalten. Bekannte Antistatika sind nach Hans Domininghaus: Kunststoffe und ihre Eigenschaften, S. 23, VDI-Verlag, 1992, Düsseldorf, bei den sogenannten inneren Antistatika ethoxylierte tertiäre Amine von Fettsäuren oder ethoxylierte Glykolesterr von Fettsäuren oder aber bei den äußeren Antistatika quaternäre Ammoniumsalze von Fettsäuren. Als Antifogmittel, oder auch als Antibeschlagmittel, werden die grenzflächenaktiven Stoffe bezeichnet, die das Beschlagen der Folienoberfläche mit feinen Wassertropfen verhindern. Bekannte Antifogmittel sind z.B. Glycerolfettsäureester oder Polyoxyethylensorbitanmonooleat.

Die Außenschicht 18 kann als Peelschicht ausgeführt sein. Ein bekanntes Verfahren zur Erreichung des Peeleffektes ist die Zugabe von Polybutylen in Polyethylenen oder ethylenischen Copolymeren wie im Ahlhaus: Verpackung mit Kunststoffen, Carl Hanser Verlag 1997, S. 239 beschrieben.

Die Gesamtdicke der erfindungsgemäßen Folie sollte bevorzugt maximal 400 µm betragen, besonders bevorzugt kleiner 300 µm sein. Die Schichtdicke des Polyamides bezogen auf die Gesamtdicke der Folie sollte vorzugsweise 40 % nicht übersteigen. Wenn der Folie die EVOH enthält, so sollte die Schichtdicke des EVOH bezogen auf die Gesamtdicke der Folie vorzugsweise kleiner als 10 %, besonders bevorzugt kleiner als 7 % sein. Die Summe der Schichtdicke beider Haftvermittler, bezogen auf die Gesamtdicke der Folie sollte vorzugsweise kleiner als 30 %, besonders bevorzugt kleiner als 15 %, sein.

### Beispiele

### Herstellung der Muster

Alle Versuchsmuster sind auf einer mehrschichtigen Blasfolienanlage hergestellt worden. Die Düsentemperatur beträgt ca. 220°C, das Aufweiterungsverhältnis ca. 2,2. Die Abzugsgeschwindigkeit liegt je nach Foliendicke zwischen 9 und 17 m/min. Die Granulate wurden entsprechend ihres Mischungsverhältnisses gemischt und anschließend den Extrudern zudosiert. Die Polymere sind entsprechend folgender Tabelle 1 charakterisiert.

**Tabelle 1**

| Bezeichnung | Dichte [kg/l] | Viskosität | Bemerkung |
|---|---|---|---|
| PA-1 | 1,14 | | PA6, rel. Viskosität von 4 (1 % Lösung gemessen in m-Kresol) |
| PA-2 | 1,19 | | PA6I/6T, ca. 2/3 Isophthal- und 1/3 Terephalsäure |
| PA-3 | 1,19 | | PA6/66, ca. 20 % Comonomer; rel. Viskosität von 4,08 (1 % Lösung gemessen in 96 % H₂SO₄) |
| HV-1 | 0,915 | 2,5* | LLDPE mit Maleinsäureanhydrid gepfropft |
| HV-2 | 0,890 | 5** | EPC mit Maleinsäureanhydrid gepfropft |
| LLDPE-1 | 0,920 | 1* | LLDPE, Comonomer: Octen |
| LLDPE-2 | 0,940 | 1 * | LLDPE, Comonomer: Octen |
| LLDPE-3 | 0,918 | 1 * | LLDPE, Comonomer: Buten |
| LDPE-1 | 0,924 | 2* | LDPE |
| LDPE-2 | 0,924 | 0,8* | LDPE |
| LDPE-3 | 0,928 | 0,8* | LDPE |
| EVA-1 | 0,925 | 3* | Ethylen/Vinylacetat-Copolymer mit ca. 5 % Vinylacatat |
| EVA-2 | 0,928 | 2* | Ethylen/Vinylacetat-Copolymer mit ca. 4,5 % Vinylacetat |
| EPC-1 | 0,897 | 2** | stat. Propylen/Ethylen-Copolymer; Schmelzpunkt 142°C |
| EPC-2 | 0,900 | 8** | stat. Propylen/Ethylen-Copolymer; Schmelzpunkt 150°C |
| EPC-3 | 0,900 | 6** | stat. Propylen/Ethylen-Copolymer, Schmelzpunkt 149°C |

| | | | |
|---|---|---|---|
| * gemessen nach ISO 1133 bei 190°C und 2,16 kg | | | |
| ** gemessen nach ISO 1133 bei 230°C und 2,16 kg | | | |

Die statistischen Propylen/Ethylen-Copolymere liegen im Ethylengehalt alle zwischen 1 und 5 Gew.-%, wobei mit steigendem Ethylengehalt die Temperatur des Schmelzpunktes fällt. Die Dichte der Polymere wird entsprechend ISO 1183 bestimmt.

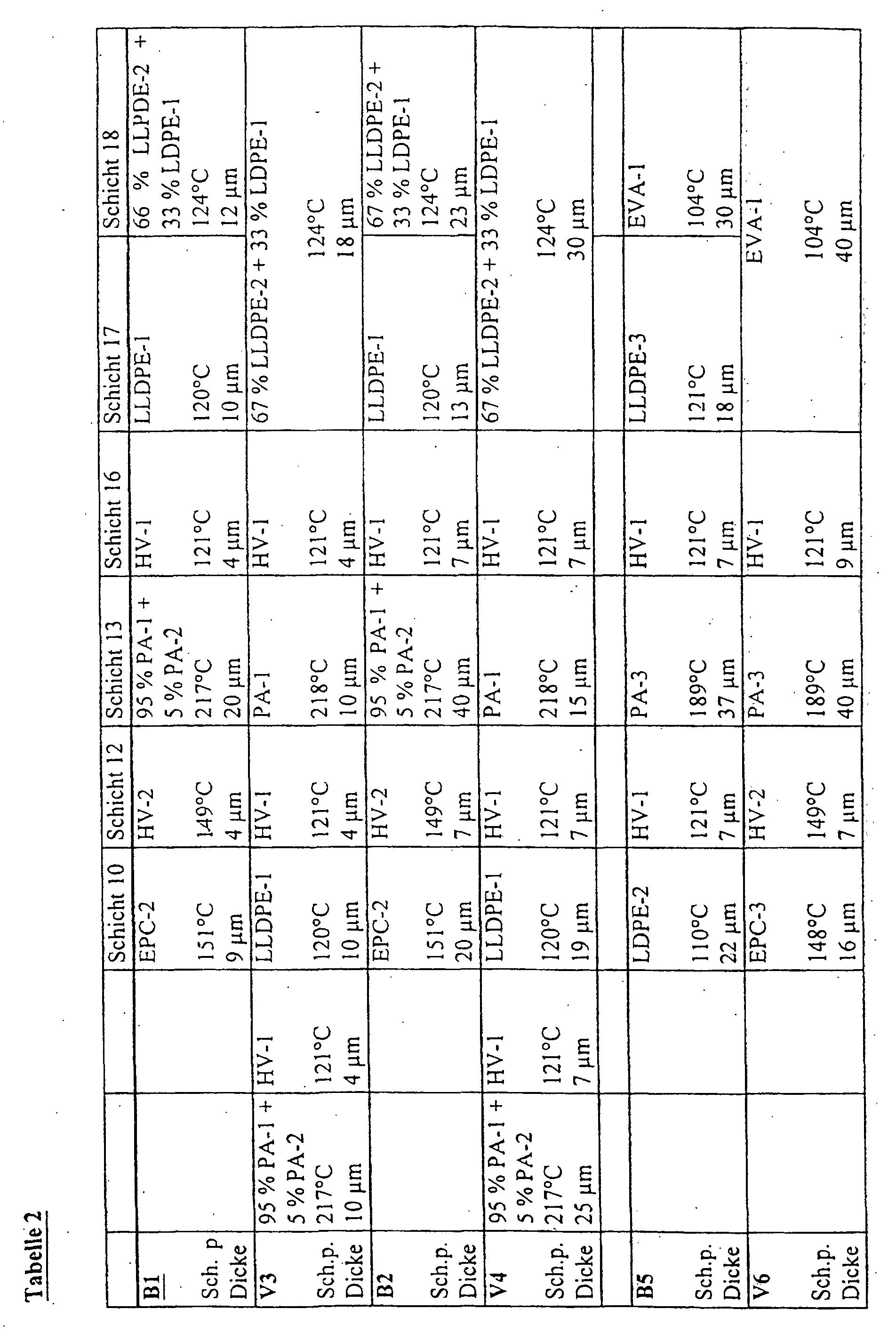

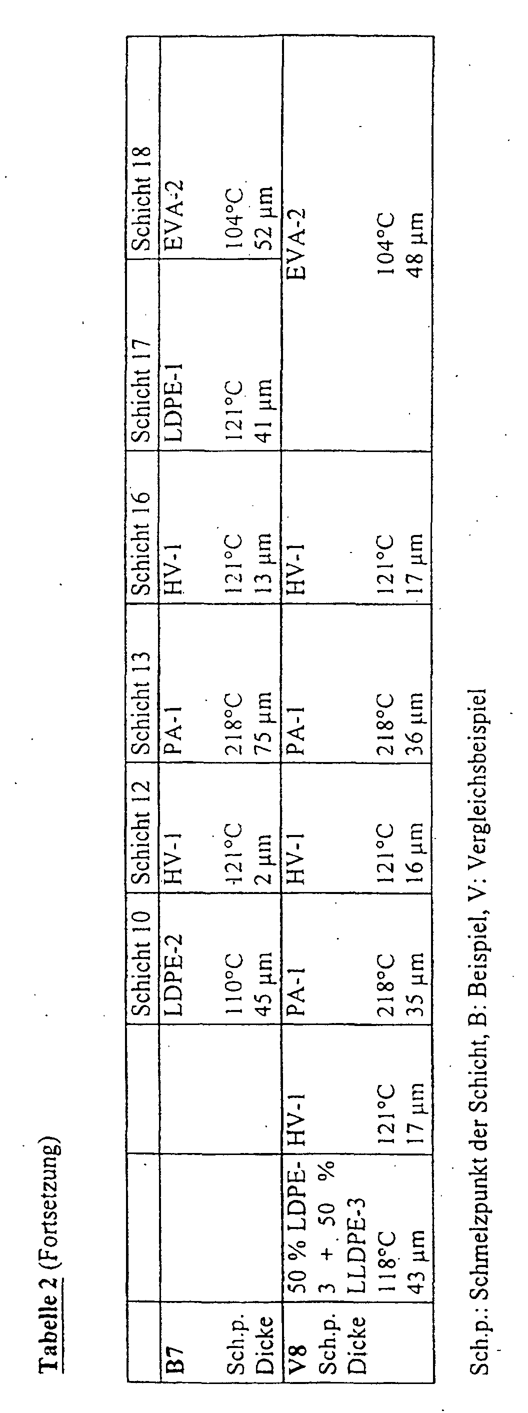

### Meßverfahren

Die Durchstichprüfung dient der Beurteilung von Folien, die mit spitzen Gegenständen beansprucht werden. Die Durchsticharbeit ist die zum Durchstechen einer membranartig aufgespannten Folie notwendige Arbeit. Es werden aus einem Folienmuster kreisförmige Proben mit dem Durchmesser 80 mm entnommen und membranartig in die Probenhalterung der elektronischen Zugprüfmaschine eingesetzt. Die Probenhalterung besitzt einen freien Durchmesser von 50 mm. Die Durchsticharbeit bestimmt sich aus dem Integral von Kraft mal Weg, die zum Durchstechen der Probe notwendig ist. Sie wird in N*cm angegeben. Der Prüfdorn besitzt an seiner Spitze einen unter 90°C abgeschliffenen Kegel mit einem Durchmesser von 1 mm. Die Probe wird mit einer Geschwindigkeit von 100 mm/min durchstochen.

### Tiefziehversuche

Auf einer horizontalen Tiefziehmaschine (Tiromat 3000 der Fa. Alfa Laval) werden die Folien einem praxisnahem Test unterzogen. Geprüft wird das Tiefziehverhalten der Folie bei einer Tiefziehtemperatur von 90°C. Die Heiz- und Tiefziehzeit beträgt 3 Sekunden. Die Muldnergröße ist 183 mm x 114mm (Breite x Länge), wobei die Ziehtiefe so lange um 5 mm erhöht wird, bis die Folie beim Tiefziehvorgang reißt. Es wird die größte Tiefe protokolliert, bei der die Folie nicht reißt.

### Gleitfähigkeit der Mulden gegeneinander

Auf einer horizontalen Tiefziehmaschine (Tiromat 3000 der Fa. Alfa Laval) werden die Folien einem praxisnahem Test unterzogen. Geprüft wird das Tiefziehverhalten der Folie mit einer Tiefziehtemperatur von 90°C. Die Heiz- und Tiefziehzeit beträgt 3 Sekunden. Die Muldengröße ist 184 mm x 114 mm (Breite x Länge), die Ziehtiefe beträgt 60 mm. Die Grundflächen der Mulden werden unmittelbar nach dem Tiefzug bei leichtem Händedruck von mindestens drei Versuchspersonen gegeneinander gerieben. Lassen sich die Mulden gegeneinander verschieben, so ist die Gleitfähigkeit ausreichend gut und wird mit "+" gekennzeichnet. Lassen sich die Mulden nicht gegeneinander verschieben, so wird ein "-" vergeben.

### Bestimmung des Schmelzpunktes von Kunststoffolien mit dem Schmetztischmikroskop

Das Prüfverfahren dient der Bestimmung des Schmelzpunktes einer Schicht in einer Kunststoffolie. Unter dem Schmelzpunkt wird die Temperatur verstanden, bei der das Kristallgitter unter atmosphärischem Druck zerfällt. Die zu messende Probe (ein Mikrotomschnitt der Folie) wird auf einem Heiztisch erwärmt und dabei mit einem Mikroskop im polarisierten Durchlicht beobachtet. Besteht eine Schicht der Folie aus einem teilkristallinen, doppelbrechenden Kunststoff, verliert sie diese Eigenschaft im Moment des Schmelzes, was im polarisierten Licht mit Anordnung der Probe zwischen gekreuzt eingestellten Polarisationsfiltern beobachtet werden kann. Falls die Folienschicht eine zu schwache oder keine Doppelbrechung aufweist, kann bei unpolarisiertem Durchlicht beobachtet werden, in welchem Temperaturbereich ein Aufschmelzen auf dem Objektträger stattfindet. In den meisten Fällen kann die Schmelztemperatur mit einer Genauigkeit von +/- 1°C angegeben werden.

| Muster | max. Ziehtiefe [mm] | Gleitfähigkeit der Mulden gegeneinander | Durchsticharbeit [N*cm] |
|---|---|---|---|
| B1 | 80 | + | 1,7 |
| V3 | 65 | - | 1,6 |
| B2 | 85 | + | 2,9 |
| V4 | 80 | - | 2,5 |
| | | | |
| B5 | 95 | + | 2,8 |
| V6 | 95 | + | 2,6 |
| | | | |
| B7 | 85 | + | 2,4 |
| V8 | 85 | + | 2,0 |

Die Gegenüberstellung der Beispiele und Vergleichsbeispiele ist so gewählt, daß die verglichenen Folien vergleichbare Typen in einer vergleichbaren Gesamtdicke enthalten.

## Patentansprüche

1. Durch Coextrusion hergestellte, mehrschichtige Folie aufgebaut aus
a) einer ersten Außenschicht 10 enthaltend ein oder mehrere Polyolefine oder Olefincopolymere oder eine Mischung dieser Polymeren,
b) einer zweiten Außenschicht 18 enthaltend ein oder mehrere Polyolefine oder Olefincopolymere oder eine Mischung dieser Polymeren,
c) einer Innenschicht 13 enthaltend ein Polyamid oder eine Mischung mehrerer Polyamide,
d) eine Innenschicht 12 enthaltend ein haftvermittelndes Polymer oder eine haftvermittelnde Polymermischung, basierend auf Polyolefinen oder aus Olefinen abgeleiteten Copolymeren,
e) eine Innenschicht 16 enthaltend ein haftvermittelndes Polymer oder eine haftvermittelnde Polymermischung basierend auf Polyolefinen oder aus Olefinen abgeleiteten Copolymeren, **dadurch gekennzeichnet,**
**dass** der Schmelzpunkt der zweiten Außenschicht 18 niedriger ist als der der ersten Außenschicht 10 und dass zwischen der zweiten Außenschicht 18 und der haftvermittelnden Schicht 16 eine zusätzliche Schicht 17 vorhanden ist, die Polyolefinen oder Olefincopolymere oder eine Mischung dieser Polymere enthält.

2. Folie nach Anspruch 1, **dadurch gekennzeichnet, dass** der Schmelzpunkt der zweiten Außenschicht 18 mindestens 5°C unter dem Schmelzpunkt der ersten Außenschicht 10 liegt

3. Folie nach Anspruch 1 oder 2, **dadurch gekennzeichnet, dass** der Schmelzpunkt der Schicht 17 sich vom Schmelzpunkt der Außenschicht 18 um mehr als 3°C unterscheidet.

4. Folie nach einem der Ansprüche 1 bis 3, **dadurch gekennzeichnet, dass** sie klebstofffrei ist.

5. Folie nach einem der Ansprüche 1 bis 4, **dadurch gekennzeichnet, dass** die Außenschicht 10 Polypropylen (PP), metallocen Ethylen-Copolymerisat (mPE), Copolymerisat aus Propylen mit 1-10 Mol% Ethylen (EPC), Polyethylen niedriger Dichte (LDPE), lineares Polyethylen niedriger Dichte (LLDPE), Polyethylen hoher Dichte (HDPE), auf Olefinen basierende Copolymerisate mit reversibler ionischer Vernetzung (I) oder Mischungen dieser Polymere enthält.

6. Folie nach einem der Ansprüche 1 bis 5, **dadurch gekennzeichnet, dass** die Außenschicht 18 Polypropylen (PP), metallocen Ethylen-Copolymerisat (mPE), Copolymerisat aus Propylen mit 1-10 Mol% Ethylen (EPC), Polyethylen niedriger Dichte (LDPE), lineares Polyethylen niedriger Dichte (LLDPE), Polyethylen hoher Dichte (HDPE), Copolymerisat aus Ethylen und Vinylacetat (EVA), Copolymerisat aus Ethylen und Methacrylsäure (EMAA), Copolymerisat aus Ethylen und Acrylsäure (EAA), auf Olefinen basierende Copolymerisate mit reversibler ionischer Vernetzung (I) oder Mischungen dieser Polymere enthält.

7. Folie nach einem der Ansprüche 1 bis 6, **dadurch gekennzeichnet, dass** die Innenschicht 13 PA6, PA11, PA12, PA66, PA6/66, PA6/12, PA6/6I, PA66/11/66, PA6/IPDI, PA6I/6T, PAMXD6, PA6I oder Mischungen dieser Polyamide enthält.

8. Folie nach einem der Ansprüche 1 bis 7, **dadurch gekennzeichnet, dass** die Innenschicht 12 und die Innenschicht 16 mit ungesättigten Dicarbonsäuren gepfropfte Polyolefine oder Olefincopolymere enthalten.

9. Folie nach einem der Ansprüche 1 bis 8, **dadurch gekennzeichnet, dass** die Außenschicht 10 und die Außenschicht 18 übliche Gleit- und Antiblockmittel enthalten.

10. Folie nach Anspruch 9, **dadurch gekennzeichnet, dass** die Außenschicht 10 und die Außensicht 18 als Gleitmittel höhere aliphatische Säureamide, höhere aliphatische Säureester, Wachse, Metallseifen sowie Polydimethylsiloxane und als Antiblockmittel feste organische oder anorganische Abstandshalter enthalten.

11. Folie nach einem der Ansprüche 1 bis 10, **dadurch gekennzeichnet, dass** zwischen der Innenschicht 13 und der Innenschicht 16 eine weitere Innenschicht angeordnet ist, welche die Durchlässigkeit von Gasen oder Strahlung reduziert und aus Polyamid besteht.

12. Folie nach einem der Ansprüche 1 bis 11, **dadurch gekennzeichnet, dass** zwischen der Innenschicht 13 und der zusätzlichen Innenschicht gemäß Anspruch 11 eine weitere Innenschicht bestehend aus EVOH angeordnet ist.

13. Verwendung einer Folie nach einem der Ansprüche 1 bis 12, zur Verpackung von unterschiedlichsten Füllgütem, insbesondere Lebensmitteln.

14. Verwendung einer Folie nach einem der Ansprüche 1 bis 12 für Tiefziehanwendungen.

## Claims

1. A multi-layered film prepared by coextrusion and constructed of
a) a first outer layer 10 containing one or more polyolefins or olefin copolymers or a mixture of these polymers,
b) a second outer layer 18 containing one or more polyolefins or olefin copolymers or a mixture of these polymers,
c) an inner layer 13 containing a polyamide or a mixture of plural polyamides,
d) an inner layer 12 containing an adhesion-promoting polymer or an adhesion-promoting polymer blend based on polyolefins or olefin-derived copolymers,
e) an inner layer 16 containing an adhesion-promoting polymer or an adhesion-promoting polymer blend based on polyolefins or olefin-derived copolymers, **characterized in that**
the melting point of the second outer layer 18 is lower than that of the first outer layer 10 and **in that** between the second outer layer 18 and the adhesion-promoting layer 16 there is an additional layer 17 which contains polyolefins or olefin copolymers or a mixture of these polymers.

2. A film according to Claim 1, **characterized in that** the melting point of the second outer layer 18 is at least 5°C below the melting point of the first outer layer 10.

3. A film according to Claim 1 or 2, **characterized in that** the melting point of layer 17 differs by more than 3°C from the melting point of outer layer 18.

4. A film according to any one of Claims 1 to 3, **characterized in that** it is adhesive free.

5. A film according to any one of Claims 1 to 4, **characterized in that** the outer layer 10 contains polypropylene (PP), metallocene ethylene copolymer (mPE), copolymer of propylene with 1-10 mol% of ethylene (EPC), low density polyethylene (LDPE), linear low density polyethylene (LLDPE), high density polyethylene (HDPE), olefin-based copolymers having reversible ionic crosslinking (I) or mixtures of these polymers.

6. A film according to any one of Claims 1 to 5, **characterized in that** the outer layer 18 contains polypropylene (PP), metallocene ethylene copolymer (mPE), copolymer of propylene with 1-10 mol% of ethylene (EPC), low density polyethylene (LDPE), linear low density polyethylene (LLDPE), high density polyethylene (HDPE), copolymer of ethylene and vinyl acetate (EVA), copolymer of ethylene and methacrylic acid (EMAA), copolymer of ethylene and acrylic acid (EAA), olefin-based copolymers having reversible ionic crosslinking (I) or mixtures of these polymers.

7. A film according to any one of Claims 1 to 6, **characterized in that** the inner layer 13 contains PA6, PA11, PA12, PA66, PA6/66, PA6/12, PA6/6I, PA66/11/66, PA6/IPDI, PA6I/6T, PAMXD6, PA6I or mixtures of these polyamides.

8. A film according to any one of Claims 1 to 7, **characterized in that** the inner layer 12 and the inner layer 16 contain olefin homo- or copolymers grafted with unsaturated dicarboxylic acids.

9. A film according to any one of Claims 1 to 8, **characterized in that** the outer layer 10 and the outer layer 18 contain customary lubricating and antiblocking agents.

10. A film according to Claim 9, **characterized in that** the outer layer 10 and the outer layer 18 contain higher aliphatic acid amides, higher aliphatic acid esters, waxes, metal soaps or polydimethylsiloxanes as lubricating agents and solid organic or inorganic spacers as antiblocking agents.

11. A film according to any one of Claims 1 to 10, **characterized in that** between the inner layer 13 and the inner layer 16 there is disposed a further inner layer which reduces gas or radiation transmittance and consists of polyamide.

12. A film according to any one of Claims 1 to 11, **characterized in that** between the inner layer 13 and the additional inner layer as per Claim 11 there is disposed a further inner layer consisting of EVOH.

13. The use of a film according to any one of Claims 1 to 12 for packing various goods, in particular food.

14. The use of a film according to any one of Claims 1 to 12 for thermoforming applications.

## Revendications

1. Film multicouche produit par coextrusion, constitué de
a) une première couche externe (10) contenant une ou plusieurs polyoléfines ou un ou plusieurs copolymères d'oléfines ou un mélange de ces polymères,
b) une deuxième couche externe (18) contenant une ou plusieurs polyoléfines ou un ou plusieurs copolymères d'oléfines ou un mélange de ces polymères,
c) une couche interne (13) contenant un polyamide ou un mélange de plusieurs polyamides,
d) une couche interne (12) contenant un polymère promoteur d'adhérence ou un mélange de polymères promoteurs d'adhérence, à base de polyoléfines ou de copolymères dérivés d'oléfines,
e) une couche interne (16) contenant un polymère promoteur d'adhérence ou un mélange de polymères promoteurs d'adhérence, à base de polyoléfines ou de copolymères dérivés d'oléfines,
**caractérisé en ce que** le point de fusion de la deuxième couche externe (18) est inférieur à celui de la première couche externe (10) et **en ce que**, entre la deuxième couche externe (18) et la couche promouvant l'adhérence (16), est présente une couche supplémentaire (17) qui contient des polyoléfines ou des copolymères d'oléfines ou un mélange de ces polymères.

2. Film selon la revendication 1, **caractérisé en ce que** le point de fusion de la deuxième couche externe (18) est inférieur d'au moins 5°C au point de fusion de la première couche externe (10).

3. Film selon la revendication 1 ou 2, **caractérisé en ce que** le point de fusion de la couche (17) diffère de plus de 3°C du point de fusion de la couche externe (18).

4. Film selon l'une quelconque des revendications 1 à 3, **caractérisé en ce qu'**il est exempt d'adhésif.

5. Film selon l'une quelconque des revendications 1 à 4, **caractérisé en ce que** la couche externe (10) contient du polypropylène (PP), un copolymère d'éthylène métallocène (mPE), un copolymère de propylène avec 1-10 % en moles d'éthylène (EPC), du polyéthylène basse densité (LDPE), du polyéthylène basse densité linéaire (LLDPE), du polyéthylène haute densité (HDPE), des copolymères à base d'oléfines, à réticulation ionique réversible (I) ou des mélanges de ces polymères.

6. Film selon l'une quelconque des revendications 1 à 5, **caractérisé en ce que** la couche externe (18) contient du polypropylène (PP), un copolymère d'éthylène métallocène (mPE), un copolymère de propylène avec 1-10 % en moles d'éthylène (EPC), du polyéthylène basse densité (LDPE), du polyéthylène basse densité linéaire (LLDPE), du polyéthylène haute densité (HDPE), un copolymère d'éthylène et d'acétate de vinyle (EVA), un copolymère d'éthylène et d'acide méthacrylique (EMAA), un copolymère d'éthylène et d'acide acrylique (EAA), des copolymères à base d'oléfines, à réticulation ionique réversible (I) ou des mélanges de ces polymères.

7. Film selon l'une quelconque des revendications 1 à 6, **caractérisé en ce que** la couche interne (13) contient du PA6, du PA11, du PA12, du PA66, du PA6/66, du PA6/12, du PA6/6I, du PA66/11/66, du PA6/IPDI, du PA6I/6T, du PAMXD6, du PA6I ou des mélanges de ces polyamides.

8. Film selon l'une quelconque des revendications 1 à 7, **caractérisé en ce que** la couche interne (12) et la couche interne (16) contiennent des polyoléfines ou copolymères d'oléfines greffées avec des acides dicarboxyliques insaturés.

9. Film selon l'une quelconque des revendications 1 à 8, **caractérisé en ce que** la couche externe (10) et la couche externe (18) contiennent des lubrifiants et agents anti-adhérence de contact usuels.

10. Film selon la revendication 9, **caractérisé en ce que** la couche externe (10) et la couche externe (18) contiennent en tant que lubrifiant des amides aliphatiques supérieurs, des esters d'acides aliphatiques supérieurs, des cires, des savons métalliques ainsi que des polydiméthylsiloxanes et, en tant qu'agent anti-adhérence de contact, des espaceurs organiques ou minéraux.

11. Film selon l'une quelconque des revendications 1 à 10, **caractérisé en ce que**, entre la couche interne (13) et la couche interne (16), est disposée une autre couche interne qui réduit la perméabilité aux gaz ou au rayonnements et consiste en polyamide.

12. Film selon l'une quelconque des revendications 1 à 11, **caractérisé en ce que**, entre la couche interne (13) et la couche interne supplémentaire selon la revendication 11, est disposée une autre couche interne consistant en EVOH.

13. Utilisation d'un film selon l'une quelconque des revendications 1 à 12, pour le conditionnement de produits de remplissage, en particulier de produits alimentaires.

14. Utilisation d'un film selon l'une quelconque des revendications 1 à 12, pour des applications d'emboutissage.
